# EUROPÄISCHE PATENTANMELDUNG

(11) **EP 3 996 229 A1**
(43) Veröffentlichungstag der Anmeldung: **11.05.2022**
(21) Anmeldenummer: 21020472.3
(22) Anmeldetag: 22.09.2021
(51) Int. Cl.: H02J 3/26, H02J 7/00, H02J 7/02, H02M 7/483, B60L 58/19, B60L 53/24

(54) **VERFAHREN UND SYSTEM ZU EINEM KONFIGURIEREN EINER WECHSELSTROMBATTERIE FÜR WECHSELSTROMLADEN**

(30) Priorität: 05.11.2020 DE 102020129132
(71) Anmelder: Dr. Ing. h.c. F. Porsche AG, 70435 Stuttgart (DE)
(72) Erfinder: Simon, Daniel, 71638 Ludwigsburg (DE); Specht, Eduardt, 76646 Bruchsal (DE); Dibos, Hermann Helmut, 75196 Remchingen (DE); Kacetl, Tomas, 67657 Kaiserslautern (DE); Jaensch, Malte, 74321 Bietigheim-Bissingen (DE); Götz, Stefan, 85659 Forstern (DE); Kacetl, Jan, 67657 Kaiserslautern (DE)

(57) **Zusammenfassung**

Die Erfindung betrifft ein Verfahren zu einem Wechselstrom laden einer Wechselstrombatterie, bei dem die Wechselstrombatterie einen Zentralkontroller und drei Stränge mit jeweilig mindestens zwei Batteriemodulen umfasst, wobei ein jeweiliges Batteriemodul der jeweilig mindestens zwei Batteriemodule mindestens einen Energiespeicher und mindestens zwei Leistungshalbleiterschalter, welche das jeweilige Batteriemodul seriell oder parallel oder unter Umgehung zu einem anderen Batteriemodul verschalten, aufweist, wobei durch die drei Stränge jeweilig eine Phase mit einer Phasenspannungshöhe bereitgestellt wird, wobei die Wechselstrombatterie über eine Ladeschaltung von einer Ladequelle aufgeladen wird, wobei durch die Ladequelle ein mindestens einphasiger Wechselstrom mit einer Ladespannungshöhe bereitgestellt wird, wobei die Ladeschaltung mindestens einen Schalter und ein Filter aufweist, wobei durch den Zentralkontroller während des Aufladens ein jeweiliger Ladezustand der Energiespeicher überwacht wird, wobei gemäß einer fortgeführten Auswertung der jeweiligen Ladezustände der Energiespeicher und durch eine dynamische Ansteuerung der Leistungshalbleiterschalter ein Momentanwert der Phasenspannungshöhe an einen zeitlichen Verlauf eines Momentanwertes der Ladespannungshöhe angepasst wird, und wobei die Wechselstrombatterie durch eine Verschaltung der Stränge untereinander und gegenüber einem Referenzpotential gemäß eines Vergleichs zwischen Phasenspannungshöhe und Ladespannungshöhe dergestalt konfiguriert wird, dass eine Ausgangsspannungshöhe der Wechselstrombatterie größer als oder gleich der Ladespannungshöhe ist. Ferner wird ein System, auf dem das Verfahren ausgeführt wird, vorgestellt.

## Beschreibung

Die vorliegende Erfindung betrifft ein Verfahren zu einem Wechselstrom laden einer umkonfigurierbaren dreiphasigen Wechselstrombatterie. Ferner wird ein System, auf dem das Verfahren ausgeführt wird, vorgestellt.

Derzeitig in Elektrofahrzeugen üblicherweise verbaute Batterien oder Batteriepacks sind fest verdrahtete Einheiten, bspw. fest miteinander verdrahtete einzelne Energiezellen, deren durch die Verdrahtung vorgegebene seriell-parallel-Konfiguration nicht geändert werden kann. Dies bedeutet, dass die gleiche Spannung, die bei einer Entladung z.B. in einem Pulswechselrichter zum Einsatz kommt, auch zu einer Aufladung verwendet wird. Die feste Verdrahtung bestimmt eine Maximalspannung der Batterie bei einem vollen Ladezustand und ohne Alterungserscheinungen. Sinkt der Ladezustand, kann die Spannung der fest verdrahteten Batterie um bis zu 50% abnehmen.

Um dann eine Gleichspannung einer Traktionsbatterie in eine für einen Elektromotor benötigte Wechselspannung umzusetzen, werden Wechselrichter eingesetzt. Eine Weiterentwicklung der voranstehend erwähnten fest verdrahteten Batterien stellen hier moderne Wechselrichter dar, bspw. gebildet durch modulare Multilevelkonverter, bei denen mehrere elektrisch verbundene Module, die jeweils mindestens einen Energiespeicher und mindestens zwei Halbleiterschalter zum Verschalten der Energiespeicher zwischen den Modulen aufweisen, in mindestens einem Modulstrang angeordnet sind. Durch eine dynamische Verschaltung kann so aus einer Gleichspannung der Energiespeicher eine Wechselspannung bspw. zum Betreiben einer elektrischen Maschine erzeugt werden. Ein Beispiel stellt der von R. Marquardt in der Druckschrift US 2018/0109202 offenbarte modulare Multilevelkonverter, auch als MMC oder M2C abgekürzt, dar. Meist steuert ein zentrales Steuergerät die jeweilige Verschaltung der Module.

In der österreichischen Druckschrift AT 508 279 A1 werden ein Verfahren und eine Anordnung zum Aufladen von in Serie geschalteten Batterien beschrieben. Mit Hilfe von gesonderten Lademitteln werden die Batterien einzeln oder in Untergruppen parallel aufgeladen.

Die Druckschrift DE 10 2010 052 934 A1 offenbart eine neue Multilevelkonvertertopologie mit der Möglichkeit zur dynamischen Seriell- und Parallelschaltung von Einzelmodulen. Jedes Einzelmodul weist mindestens vier interne Schaltelemente, ein Energiespeicherelement und vier Anschlüsse auf und kann durch eine jeweilige Schaltstellung der internen Schaltelemente das Energiespeicherelement seriell oder parallel mit den Energiespeicherelementen benachbart verbundener Einzelmodule verschalten.

Die Druckschrift DE 10 2014 204 260 A1 beschreibt ein Verfahren und ein System zum Steuern eines Elektrofahrzeugs während des Aufladens. Die Steuerung ist zum Aufladen der Traktionsbatterie auf einen angezielten Ladezustand, Konditionieren der Traktionsbatterie auf eine angezielte Batterietemperatur und Konditionieren der Fahrzeugkabine auf eine angezielte Kabinentemperatur ausgelegt.

Standardmäßig ist eine Batterie jedoch nicht mit weiteren Steuerkomponenten für eine Gleichstromladung ausgestattet. Eine Ladebuchse ist direkt mit Anschlusspunkten der Batterie bzw. des Batteriepacks ohne jegliche galvanische Isolation verbunden, wobei eine Ladeleistung von einer Ladekontrolle bestimmt wird. Ein konventionelles Batteriepack kann also nur durch eine gesteuerte Gleichstromladungsquelle mit einer vorgegebenen Spannungshöhe geladen werden, wobei 400 V und 800 V typische Spannungshöhen sind. Falls eine Nennspannung des Batteriepacks höher ist als die maximal einzustellende Ladespannung einer Ladequelle, kann das Batteriepack nicht geladen werden.

Vor diesem Hintergrund ist es eine Aufgabe der vorliegenden Erfindung, ein Verfahren zu einem Wechselstromladen einer modularen Wechselstrombatterie vorzustellen. Eine zentrale Steuerung dieser Wechselstrombatterie soll so gestaltet werden, dass die Wechselstrombatterie einer jeweiligen Ladespannungshöhe angepasst werden kann. Ferner soll ein System, auf dem das Verfahren ausgeführt wird, vorgestellt werden.

Zur Lösung der voranstehend genannten Aufgabe wird ein Verfahren zu einem Wechselstromladen einer Wechselstrombatterie vorgeschlagen, bei dem die Wechselstrombatterie einen Zentralkontroller und drei Stränge mit jeweilig mindestens zwei Batteriemodulen umfasst. Ein jeweiliges Batteriemodul der jeweilig mindestens zwei Batteriemodule weist mindestens einen Energiespeicher und mindestens zwei Leistungshalbleiterschalter, welche das jeweilige Batteriemodul seriell oder parallel oder unter Umgehung zu einem anderen Batteriemodul verschalten, auf. Durch die drei Stränge wird jeweilig eine Phase mit einer Phasenspannungshöhe bereitgestellt. Die Wechselstrombatterie wird über eine Ladeschaltung von einer Ladequelle aufgeladen, wobei durch die Ladequelle ein mindestens einphasiger Wechselstrom mit einer Ladespannungshöhe bereitgestellt wird und die Ladeschaltung mindestens einen Schalter und ein Filter aufweist. Durch den Zentralkontroller wird während des Aufladens ein jeweiliger Ladezustand der Energiespeicher überwacht, wobei gemäß einer fortgeführten Auswertung der jeweiligen Ladezustände der Energiespeicher und durch eine dynamische Ansteuerung der Leistungshalbleiterschalter ein Momentanwert der Phasenspannungshöhe an einen zeitlichen Verlauf eines Momentanwertes der Ladespannungshöhe angepasst wird und die Wechselstrombatterie durch eine Verschaltung der Stränge untereinander und gegenüber einem Referenzpotential gemäß eines Vergleichs zwischen Phasenspannungshöhe und Ladespannungshöhe dergestalt konfiguriert wird, dass eine Ausgangsspannungshöhe der Wechselstrombatterie größer als oder gleich der Ladespannungshöhe ist.

Aus der Phasenspannungshöhe ergibt sich unmittelbar eine Spannung zwischen zwei Phasen, welche vom Fachmann als Außenleiterspannung bezeichnet wird. Bei einem dreiphasigen sinusförmigen Wechselstrom beträgt das Verhältnis zwischen Phasenspannungshöhe und Außenleiterspannungshöhe eins zu Wurzel drei.

Das Filter der Ladeschaltung unterdrückt einen durch einen Spannungsunterschied zwischen der Wechselstrombatterie und der Ladequelle bewirkten Einschaltstrom. Der Spannungsunterschied kann bspw. durch einen sich ändernden Ladestrom einer ungesteuerten Ladequelle oder im Moment des Anschlusses der Ladeschaltung an die Ladequelle entstehen. Das Filter hat dabei auch die Aufgabe, elektromagnetische Interferenzen herauszufiltern.
Weiter ist es ist denkbar, dass die Wechselstrombatterie einen "phase lock loop" (abgekürzt PLL) verwendet, um einen Stoßstrom beim Umschalten der Ladequelle bzw. EVSE auf das Elektrofahrzeug bzw. EV zu vermeiden. Die Klemmenspannung der Wechselstrombatterie wird während des Ladevorgangs auf einen Momentanwert der Ladespannung eingestellt.

Eine Wechselstrom batterie gemäß des erfindungsgemäßen Verfahren wird bspw. beschrieben in "Goetz, S.M.; Peterchev, A.V.; Weyh, T., "Modular Multilevel Converter With Series and Parallel Module Connectivity: Topology and Control," Power Electronics, IEEE Transactions on, vol.30, no.1, pp.203,215, 2015. doi: 10.1109/TPEL.2014.2310225. Eine solche Wechselstrom batterie kann ihre jeweiligen Batteriemodule seriell, parallel oder unter Umgehung mit benachbarten Batteriemodulen verschalten, und damit eine Klemmenspannung zwischen einem Negativen und einem Positiven einer durch eine Anzahl an Batteriemodulen (und der jeweilige umfassten Energiespeicher) pro Strang vorgegebenen Maximalspannung aktiv einstellen. Auch jenseits der sich aus einer seriellen oder parallelen Verschaltung oder möglichen Kombinationen ergebenden Klemmenspannung, lässt sich durch hochfrequentes Umschalten oder Zu- und Abschalten einzelner Batteriemodule, mit dem Elektromotor als Tiefpass, ein sich im zeitlichen Mittel ergebender beliebiger (Betrags-)Wert bis zur Maximalspannung einstellen. Die Einstellung führt das Steuerprogramm auf dem Zentralkontroller aus, welches die serielle/parallele/bypass Verschaltung der Batteriemodule unter Berücksichtigung der jeweiligen Zustände der Energiespeicher dergestalt steuert, dass bspw. eine Funktion einer Leistungsfaktorkorrektur ausgeführt wird und ein diesbezüglich in konventionellen OBCs (Abkürzung für Englisch On-Board-Charger) vorhandener Schaltkreis entfällt, wodurch das das erfindungsgemäße Verfahren ausführende Steuerprogramm respektive der Zentralkontroller vorteilhaft einen geringeren Platzbedarf und geringere Produktionskosten aufweisen als ein konventionelles OBC. Ist die Phasenspannungshöhe der Wechselstrom batterie höher als die Ladespannungshöhe, kann die Wechselspannungsbatterie den Ladestrom steuern. Dies kann sowohl bei einem einphasigen Laden, wie auch bei einem dreiphasigen Laden umgesetzt werden.

In einer Ausführungsform des erfindungsgemäßen Verfahrens wird durch die Ladequelle ein einphasiger Wechselstrom des mindestens einphasigen Wechselstroms bereitgestellt. Im Fall, dass die Ladespannungshöhe kleiner als die Phasenspannungshöhe der Wechselstrombatterie ist, wird ein jeweiliger Phasenausgang der drei Stränge zu einem einzelnen Phasenausgang umkonfiguriert und die Wechselstrombatterie direkt über das Filter aus der Ladequelle geladen. Damit wird die dreiphasige Wechselstrombatterie wie eine einphasige Wechselstrombatterie behandelt. Weiter wird im Fall, dass die Ladespannungshöhe kleiner als eine Spannungshöhe zwischen zwei Phasen der Wechselstrombatterie, aber größer als die Phasenspannungshöhe der Wechselstrombatterie oder gleich der Phasenspannungshöhe der Wechselstrombatterie ist, ein Eingang eines ersten Stranges der drei Stränge mit dem Referenzpotential verbunden und ein Phasenausgang des ersten Stranges der drei Stränge mit dem jeweiligen Eingang der zwei anderen Stränge der drei Stränge verbunden, sowie der jeweilige Phasenausgang der zwei anderen Stränge der drei Stränge zu einem einzelnen Phasenausgang der Wechselstrombatterie umkonfiguriert und die Wechselstrombatterie direkt über das Filter aus der Ladequelle geladen. Damit wird die dreiphasige Wechselstrombatterie Phase-zu-Phase geladen. Ferner wird im Fall, dass die Ladespannungshöhe kleiner als das Zweifache der Spannungshöhe zwischen zwei Phasen der Wechselstrombatterie, aber größer als die oder gleich der Spannungshöhe zwischen zwei Phasen der Wechselstrombatterie ist, der Eingang des ersten Stranges der drei Stränge mit dem Referenzpotential verbunden und der Phasenausgang des ersten Stranges der drei Stränge parallel mit dem jeweiligen Eingang der zwei anderen Stränge der drei Stränge verbunden, sowie der jeweilige Phasenausgang der zwei anderen Stränge der drei Stränge zu einem einzelnen Phasenausgang der Wechselstrombatterie umkonfiguriert, zwischen dem einzelnen Phasenausgang und dem Filter zusätzlich ein einphasiger Gleichrichter angeordnet und die Wechselstrombatterie über den einphasigen Gleichrichter und das Filter aus der Ladequelle geladen.

In einer anderen Ausführungsform des erfindungsgemäßen Verfahrens wird durch die Ladequelle ein dreiphasiger Wechselstrom des mindestens einphasigen Wechselstroms bereitgestellt. Im Fall, dass die Ladespannungshöhe kleiner als die Phasenspannungshöhe der Wechselstrombatterie ist, wird ein jeweiliger Phasenausgang der drei Stränge zu einem jeweiligen Phasenausgang der Ladequelle verbunden und die Wechselstrombatterie direkt über das Filter aus der Ladequelle geladen. Damit wird die dreiphasige Wechselstrombatterie wie eine einphasige Wechselstrombatterie behandelt. Weiter wird im Fall, dass die Ladespannungshöhe kleiner als das Zweifache der Phasenspannungshöhe der Wechselstrombatterie, aber größer oder gleich der Phasenspannungshöhe der Wechselstrombatterie ist, zwischen den jeweiligen Phasenausgängen und dem Filter zusätzlich ein dreiphasiger Gleichrichter angeordnet und die Wechselstrombatterie über den dreiphasigen Gleichrichter und das Filter aus der Ladequelle geladen.

Das erfindungsgemäße Verfahren stellt damit verschiedene Ladetechniken mit der umkonfigurierbaren Wechselstrombatterie vor und erweitert vorteilhaft einen Bereich von Ladespannungshöhen, bei dem geladen werden kann. Durch die der jeweiligen Ladespannungshöhe zugeordnete Konfiguration der Wechselstrombatterie, ist die Wechselstrombatterie in der Lage, den Stromfluss von der Ladequelle bzw. Ladesäule zu steuern.

In einer weiteren Ausführungsform des erfindungsgemäßen Verfahrens umfasst der Zentralkontroller eine Hardware-programmierbare Prozessoreinheit, auf welcher ein Steuerprogramm zum Ansteuern der Wechselstrombatterie bei Betriebsbeginn konfiguriert wird. Für eine solche Prozessoreinheit kann bspw. ein FPGA gewählt werden. Das FPGA steht als Abkürzung für ein "Field Programmable Gate Array", zu Deutsch "betriebsbezogene programmierbare Gatter-Anordnung". Auf dem FPGA ist bspw. zu einem Start bzw. Betriebsbeginn des Elektrofahrzeuges für die durch den Zentralkontroller ausgeführte erfindungsgemäße Ansteuerung der Wechselstrombatterie eine jeweilige Prozessor-Programmierung konfigurierbar, welche als Hardware-Umsetzung gilt und entsprechend betriebssicher ausführbar ist. Das FPGA kann vorteilhaft mit einem Mikrocontroller verbunden sein oder das FPGA kann zusätzlich einen Mikrocontroller umfassen. In einer weiter fortgesetzten Ausführungsform ist es auch denkbar, den Zentralkontroller auf einem Mikrocontroller oder einer anwendungsspezifischen integrierten Schaltung, vom Fachmann mit "Application-specific Integrated Circuit" bzw. ASIC bezeichnet, auszuführen. Eine Kombination aus Mikrocontroller und FPGA/ASIC stellt eine weitere vorteilhafte Ausführungsform dar.

In einer noch weiteren Ausführungsform des erfindungsgemäßen Verfahrens wird die Ladeschaltung durch einen Ladekontroller gesteuert. Der Ladekontroller umfasst eine Hardware-programmierbare Prozessoreinheit, auf welcher ein Steuerprogramm zum Ansteuern der Ladeschaltung bei Betriebsbeginn konfiguriert wird.

Der einphasige bzw. dreiphasige Gleichrichter kann als aktive elektrische Bauelemente mindestens zwei von dem Ladekontroller gesteuerte Halbleiterschalter umfassen. Bei den Halbleiterschaltern kann es sich vorzugsweise um IGBT, MOSFET oder IGCT handeln. Damit wird eine Effizienz, aber auch eine Komplexität der Ladeschaltung erhöht.

In einer noch weiter fortgesetzten Ausführungsform des erfindungsgemäßen Verfahrens werden vom einphasigen bzw. dreiphasigen Gleichrichter passive und aktive elektrische Bauelemente umfasst und diese durch den Ladekontroller hinsichtlich maximaler Effizienz kombiniert. Eine solche optimale Kombination weist größtmögliche Effizienz bei kleinster Komplexität auf.

In einer fortgesetzt weiteren Ausführungsform des erfindungsgemäßen Verfahrens wird durch eine dynamische Ansteuerung der Leistungshalbleiterschalter eine Ladeleistung kontrolliert. Der Ladesteuerung liegen neben den Informationen über die Ladezustände der Energiespeicher zusätzlich die Werte einer Ladespannung und eines Ladestroms vor, womit der Zentralkontroller die Leistungshalbleiterschalter der Wechselstrombatterie so ansteuert, dass ein vorgegebener Wert einer aus dem Produkt Ladespannung und Ladestrom gebildeten Ladeleistung eingehalten wird.

Ein weiterer Vorteil des erfindungsgemäßen Verfahrens ist, dass Anforderungen an eine Gleichspannungswelligkeit eines an der Wechselstrombatterie anliegenden Ladestroms in größeren Grenzen als bei einer konventionellen Batterie gefasst werden können. Eine Gleichspannungswelligkeit des vom Gleichrichter bereitgestellten Ladestroms kann bspw. durch hochfrequente Schwankungen (Ripple) des von der Ladequelle bereitgestellten Wechselstroms bedingt sein. Dass das erfindungsgemäße Verfahren ausführende Steuerprogramm des Zentralkontrollers stellt dies durch Messvorrichtungen, die die Ladespannung bzw. den Ladestrom messen, fest und reagiert darauf durch eine fortgeführte Änderung der seriell-parallelen Verschaltung der Batteriemodule und der sich dadurch ändernden Klemmenspannung, um zu jedem Zeitpunkt optimale Ladebedingungen, wie bspw. eine geringere oder gleiche Klemmenspannung als die Ladespannung, bereitzustellen. Die fortgeführte Änderung der seriell-parallelen Verschaltung wird dabei jeweilig erneut zu einem vorgebebenen Schaltungstakt ausgeführt, wobei der Schaltungstakt klein genug gewählt ist, um Änderungen in dem von der Ladequelle bereitgestellten Wechselstrom folgen zu können.

Ferner wird ein System zu einem Wechselstromladen einer Wechselstrombatterie beansprucht, bei dem die Wechselstrombatterie einen Zentralkontroller und drei Stränge mit jeweilig mindestens zwei Batteriemodulen umfasst. Ein jeweiliges Batteriemodul der jeweilig mindestens zwei Batteriemodule weist mindestens einen Energiespeicher und mindestens zwei Leistungshalbleiterschalter, welche das jeweilige Batteriemodul seriell oder parallel oder unter Umgehung zu einem anderen Batteriemodul verschalten, auf. Die drei Stränge sind dazu ausgelegt, jeweilig eine Phase mit einer jeweiligen Phasenspannungshöhe bereitzustellen. Eine Ladeschaltung ist dazu ausgelegt, die Wechselstrombatterie von einer Ladequelle aufzuladen und einen mindestens einphasigen Wechselstrom mit einer Ladespannungshöhe bereitzustellen, wobei die Ladeschaltung mindestens einen Schalter und ein Filter aufweist. Der Zentralkontroller ist dazu ausgelegt, während des Aufladens einen jeweiligen Ladezustand der Energiespeicher zu überwachen und gemäß einer fortgeführten Auswertung der jeweiligen Ladezustände der Energiespeicher und durch eine dynamische Ansteuerung der Leistungshalbleiterschalter einen Momentanwert der Phasenspannungshöhe an einen zeitlichen Verlauf eines Momentanwertes der Ladespannungshöhe anzupassen. Der Zentralkontroller ist zusätzlich dazu ausgelegt, die Wechselstrombatterie durch eine Verschaltung der Stränge untereinander und gegenüber einem Referenzpotential gemäß eines Vergleichs zwischen Phasenspannungshöhe und Ladespannungshöhe dergestalt zu konfigurieren, dass eine Ausgangsspannungshöhe der Wechselstrombatterie größer oder gleich der Ladespannungshöhe ist.

In einer Ausgestaltung des erfindungsgemäßen Systems ist durch die Ladequelle ein einphasiger Wechselstrom des mindestens einphasigen Wechselstroms bereitgestellt. Im Fall, dass die Ladespannungshöhe kleiner als die Phasenspannungshöhe der Wechselstrombatterie ist, ist das System dazu ausgelegt, einen jeweiligen Phasenausgang der drei Stränge zu einem einzelnen Phasenausgang der Wechselstrombatterie umzukonfigurieren und die Wechselstrombatterie direkt über das Filter aus der Ladequelle zu laden. Für den Fall, dass die Ladespannungshöhe kleiner als eine Spannungshöhe zwischen zwei Phasen der Wechselstrombatterie, aber größer als oder gleich der Phasenspannungshöhe der Wechselstrombatterie ist, ist das System dazu ausgelegt, einen Eingang eines ersten Stranges der drei Stränge mit dem Referenzpotential zu verbinden und einen Phasenausgang des ersten Stranges der drei Stränge parallel mit einem jeweiligen Eingang der zwei anderen Stränge der drei Stränge zu verbinden, sowie den jeweiligen Phasenausgang der zwei anderen Stränge der drei Stränge zu dem einzelnen Phasenausgang der Wechselstrombatterie umzukonfigurieren und die Wechselstrombatterie direkt über das Filter aus der Ladequelle zu laden. Zudem ist im Fall, dass die Ladespannungshöhe kleiner als das Zweifache der Spannungshöhe zwischen zwei Phasen der Wechselstrombatterie, aber größer als die Spannungshöhe zwischen zwei Phasen der Wechselstrombatterie oder gleich der Spannungshöhe zwischen zwei Phasen der Wechselstrombatterie ist, das System dazu ausgelegt, den Eingang des ersten Stranges der drei Stränge mit dem Referenzpotential zu verbinden und den Phasenausgang des ersten Stranges der drei Stränge parallel mit dem jeweiligen Eingang der zwei anderen Stränge der drei Stränge zu verbinden, sowie den jeweiligen Phasenausgang der zwei anderen Stränge der drei Stränge zu dem einzelnen Phasenausgang der Wechselstrombatterie umzukonfigurieren, zwischen dem einzelnen Phasenausgang der Wechselstrom batterie und dem Filter zusätzlich einen einphasigen Gleichrichter anzuordnen und die Wechselstrombatterie über den einphasigen Gleichrichter und das Filter aus der Ladequelle zu laden.

In einer anderen Ausgestaltung des erfindungsgemäßen Systems ist durch die Ladequelle ein dreiphasiger Wechselstrom des mindestens einphasigen Wechselstroms bereitgestellt. Im Fall, dass die Ladespannungshöhe kleiner als die Phasenspannungshöhe der Wechselstrombatterie ist, ist das System dazu ausgelegt ist, den jeweiligen Phasenausgang der drei Stränge zu einem jeweiligen Phasenausgang der Ladequelle zu verbinden und die Wechselstrombatterie direkt über das Filter aus der Ladequelle zu laden. Weiter ist im Fall, dass die Ladespannungshöhe kleiner als das Zweifache der Phasenspannungshöhe der Wechselstrombatterie, aber größer als die Phasenspannungshöhe oder gleich der Phasenspannungshöhe der Wechselstrombatterie ist, das System dazu ausgelegt, zwischen den jeweiligen Phasenausgängen der Wechselstrombatterie und dem Filter zusätzlich einen dreiphasigen Gleichrichter anzuordnen und die Wechselstrombatterie über den dreiphasigen Gleichrichter und das Filter aus der Ladequelle zu laden.

In einer weiteren Ausgestaltung des erfindungsgemäßen Systems umfasst der Zentralkontroller eine Hardware-programmierbare Prozessoreinheit, auf welcher ein Steuerprogramm zum Ansteuern der Wechselstrombatterie bei Betriebsbeginn konfiguriert ist.

In einer noch weiteren Ausgestaltung des erfindungsgemäßen Systems ist die Ladeschaltung durch einen Ladekontroller gesteuert. Der Ladekontroller umfasst eine Hardware-programmierbare Prozessoreinheit, auf welcher ein Steuerprogramm zum Ansteuern der Ladeschaltung bei Betriebsbeginn konfiguriert ist.

In einer Ausgestaltung des erfindungsgemäßen Systems ist die Prozessoreinheit ein FPGA und der Zustandsautomat durch das Steuerprogramm mit Hilfe eines VHDL-Moduls auf dem FPGA als Hardware-Programm realisiert.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Figuren werden zusammenhängend und übergreifend beschrieben, gleichen Komponenten sind dieselben Bezugszeichen zugeordnet.
Figur 1 zeigt ein Schaltschema zu einer Wechselstrombatterie nach dem Stand der Technik.
Figur 2 zeigt ein Schaltschema zu einem einphasigen Ladevorgang bei Ladespannungshöhe kleiner als Phasenspannungshöhe in einer Ausführungsform des erfindungsgemäßen Verfahrens.
Figur 3 zeigt ein Schaltschema zu einem einphasigen Ladevorgang bei Ladespannungshöhe kleiner als Außenleiterspannung in einer weiteren Ausführungsform des erfindungsgemäßen Verfahrens.
Figur 4 zeigt ein Schaltschema zu einem einphasigen Ladevorgang bei Ladespannungshöhe kleiner als zweimal Außenleiterspannung in einer noch weiteren Ausführungsform des erfindungsgemäßen Verfahrens.
Figur 5 zeigt ein Schaltschema zu einem dreiphasigen Ladevorgang bei Ladespannungshöhe kleiner als Phasenspannungshöhe in einer anderen Ausführungsform des erfindungsgemäßen Verfahrens.
Figur 6 zeigt ein Schaltschema zu einem dreiphasigen Ladevorgang bei Ladespannungshöhe kleiner als zweimal Phasenspannungshöhe in einer noch anderen Ausführungsform des erfindungsgemäßen Verfahrens.

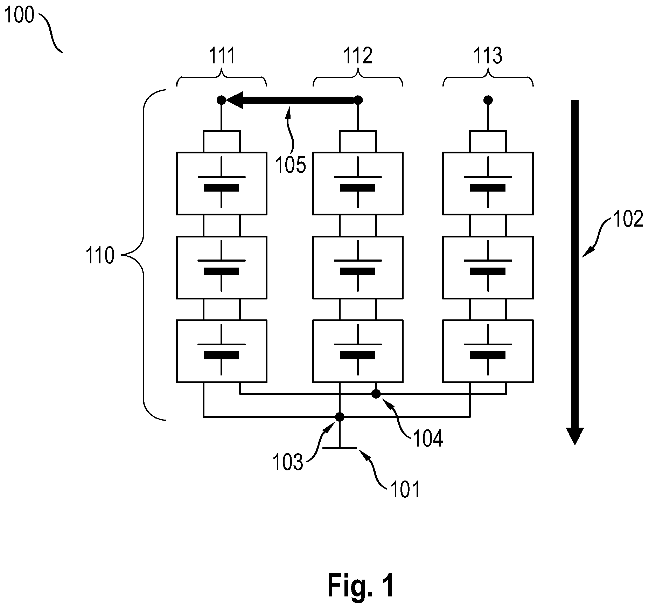

In Figur 1 wird ein Schaltschema 100 zu einer Wechselstrombatterie 110 nach dem Stand der Technik gezeigt. Die Wechselstrombatterie 110 weist drei Stränge 111, 112, 113 mit jeweilig in Reihe verschalteten Batteriemodulen auf, wobei ein jeweiliges Batteriemodul mindestens einen Energiespeicher und Leistungshalbleiterschalter aufweist. Die Leistungshalbleiterschalter können den mindestens einen Energiespeicher des jeweiligen Batteriemoduls seriell, parallel mit dem mindestens einen Energiespeicher eines benachbarten Batteriemoduls verschalten, oder den mindestens einen Energiespeicher des jeweiligen Batteriemoduls umgehen (Bypass). Die jeweiligen Stränge 111, 112, 113 weisen jeweils zwei Eingangsanschlüsse und zwei Ausgangsanschlüsse auf, wobei die jeweils ersten Eingangsanschlüsse zu einem ersten Nullpunkt 103, welcher mit einem Referenzpotential 101 verbunden ist, zusammengeschlossen sind. Die jeweils zweiten Eingangsanschlüsse sind zu einem zweiten Nullpunkt 104 zusammengeschlossen. Die jeweilig zwei Ausgangsanschlüsse sind zu einem jeweilig einzelnen Phasenausgang der drei Stränge 111, 112, 113 zusammengeschlossen. Während die Wechselstrom batterie 110 einen Phasenspannungshöhe 102 aufweist, liegt zwischen zwei jeweiligen Strängen 111, 112, 113, bspw. zwischen Strang 112 und Strang 111, eine Außenleiterspannung 105 vor.

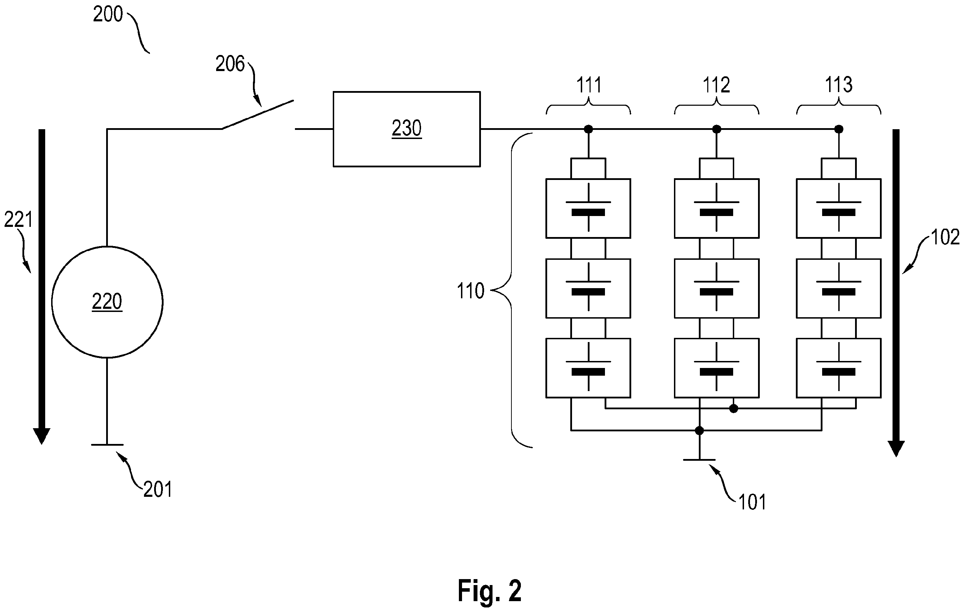

In Figur 2 wird ein Schaltschema 200 zu einem einphasigen Ladevorgang bei einer Ladespannungshöhe 221 kleiner als die Phasenspannungshöhe 102 in einer Ausführungsform des erfindungsgemäßen Verfahrens gezeigt. Eine einen einphasigen Wechselstrom bereitstellende Ladequelle bzw. eine Ladesäule 220 weist gegenüber dem Referenzpotential 201 die Ladespannungshöhe 221 auf. Die Ladequelle 220 ist hierzu bspw. an ein Stromnetz angeschlossen. Eine Ladeschaltung umfasst einen Ladeschalter 206, welcher zu einer Aufladung der Wechselstrombatterie 110 geschlossen wird, und ein Filter 230. Die drei Stränge 111, 112, 113 der Wechselstrombatterie 110 sind zu einem einzelnen Phasenausgang zusammengeschlossen.

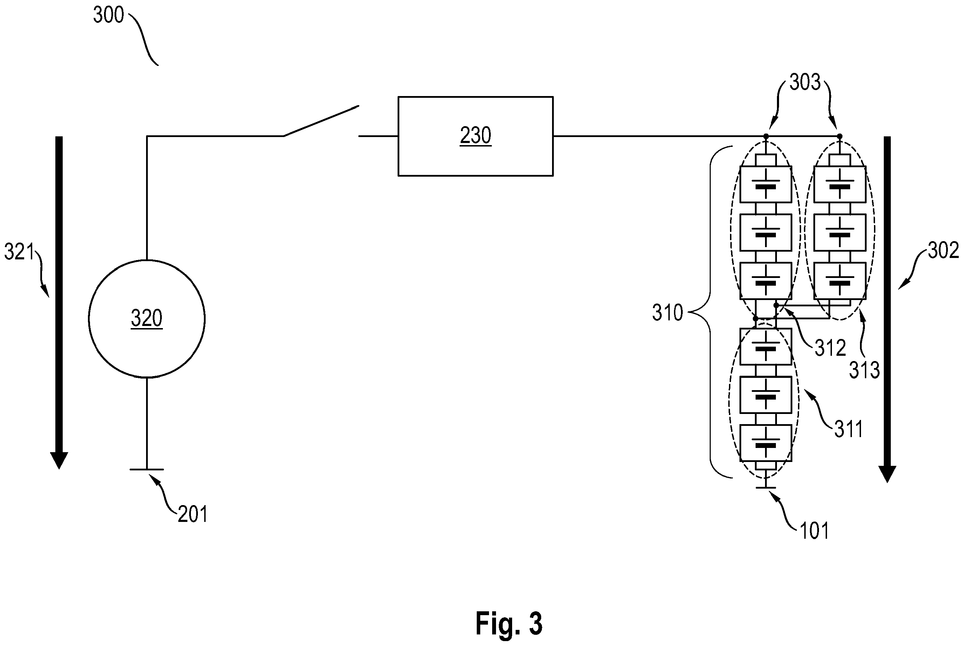

In Figur 3 wird ein Schaltschema 300 zu einem einphasigen Ladevorgang in einer weiteren Ausführungsform des erfindungsgemäßen Verfahrens gezeigt. Hierbei ist eine von einer Ladequelle 320 bereitgestellte Ladespannungshöhe 321 größer als oder gleich der Phasenspannungshöhe 102 der Wechselstrom batterie 110 aus Fig. 1 oder Fig. 2, jedoch kleiner als deren Außenleiterspannung 105. Durch die erfindungsgemäße Umkonfiguration wird eine Wechselstrom batterie 310 erhalten, bei der ein Eingang eines ersten Stranges 311 mit dem Referenzpotential 101 verbunden ist. An beiden Ausgängen des ersten Stranges 311 werden jeweilige Eingänge der beiden anderen Stränge 312, 313 angeschlossen, so dass die zwei anderen Stränge 312, 313 parallel geschaltet sind. Deren jeweilige Ausgänge werden zu einem Einphasenausgang 303 der Wechselstrom batterie 310 verbunden. Die Wechselstrom batterie 310 weist damit eine Spannung 302 in Höhe der Ausleiterspannung 105 der Wechselstrombatterie 110 aus Fig. 1 auf, welche in diesem Beispielfall höher ist als die Ladespannungshöhe 321 und damit der Wechselstrombatterie 310 bzw. deren Zentralkontroller vorteilhaft ermöglicht, den Ladestrom zu steuern.

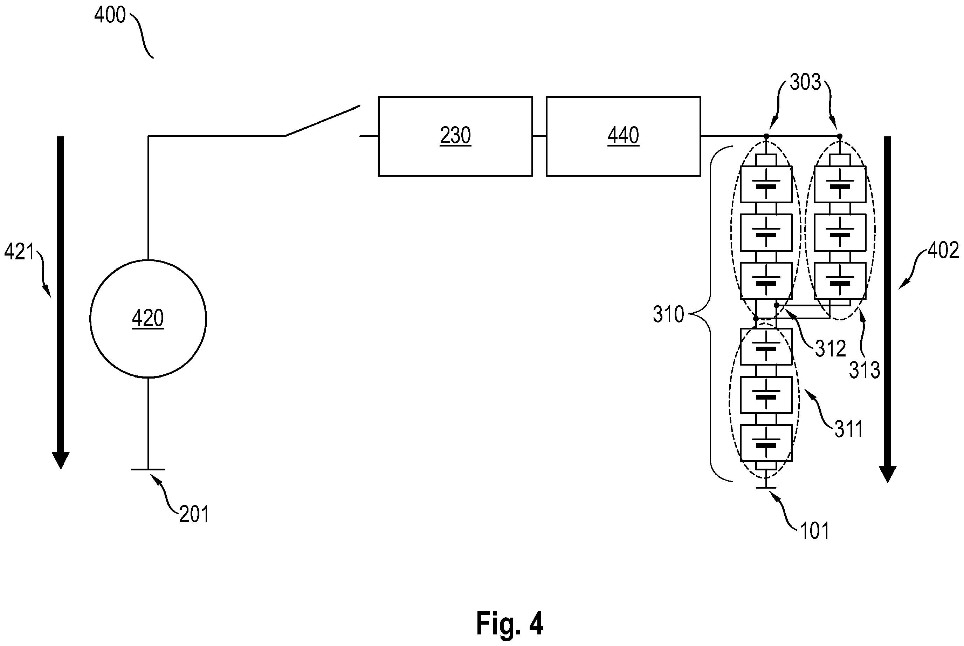

In Figur 4 wird ein Schaltschema 400 zu einem einphasigen Ladevorgang in einer noch weiteren Ausführungsform des erfindungsgemäßen Verfahrens gezeigt. Hierbei ist eine von einer Ladequelle 420 bereitgestellte Ladespannungshöhe 421 größer als oder gleich der Außenleiterspannung 105 der Wechselstrom batterie 110 aus Fig. 1, jedoch kleiner als ein Zweifaches dieser Außenleiterspannung 105. Zusätzlich zu der in Fig. 3 vorgestellten erfindungsgemäßen Umkonfiguration zur Wechselstrombatterie 310 wird ein Gleichrichter 440 angeordnet, der die Ladespannung der Ladequelle 420 auf positive Werte beschränkt und damit die Ladespannungshöhe 421 gegenüber dem Referenzpotential 101 halbiert. Dadurch wird erreicht, dass eine am Einphasenausgang 303 der Wechselstrom batterie 310 anliegende Ladespannung kleiner als eine Spannungshöhe 302 der Wechselstrombatterie 310 (welche der Außenleiterspannung 105 der Wechselstrombatterie 110 aus Fig. 1 entspricht) ist, und damit vorteilhaft der Wechselstrombatterie 310 ermöglicht, den Ladestrom zu steuern.

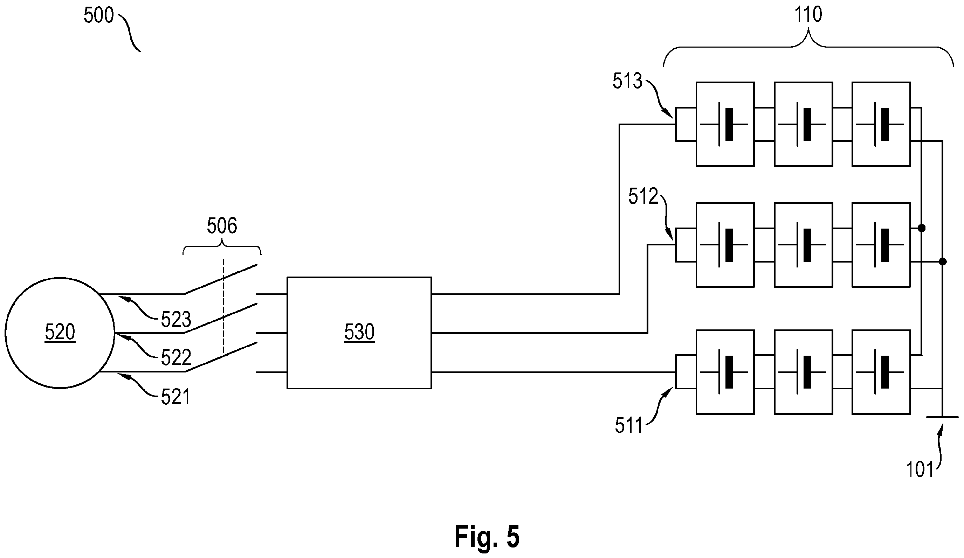

In Figur 5 wird ein Schaltschema 500 zu einem dreiphasigen Ladevorgang in einer anderen Ausführungsform des erfindungsgemäßen Verfahrens gezeigt. Eine durch eine dreiphasige Ladequelle 520 bereitgestellte Ladespannungshöhe sei kleiner als die Phasenspannungshöhe 102 der Wechselstrombatterie 110 aus Fig. 1, deren jeweilige Strangausgänge zu einem jeweiligen Phasenausgang 511, 512, 513 zusammengeschlossen sind. Jeweilig sind diese Phasenausgänge 511, 512, 513 der Wechselstrombatterie 110 bei geschlossenem Ladeschalter 506 direkt über das Filter 530 mit entsprechenden Phasenausgängen 521, 522, 523 der Ladequelle 520 verbunden. Da die von der dreiphasigen Ladequelle 520 bereitgestellte Ladungshöhe kleiner als die Phasenspannungshöhe 102 der Wechselstrombatterie 110 aus Fig. 1 ist, kann die Wechselstrom batterie 110 den Ladestrom steuern, weshalb aus dem Stand der Technik bekannte Bauteile einer (On-Board) Ladeschaltung, wie bspw. Gleichrichter, Leistungsfaktorkorrekturfilter oder Gleichspannungswandler, vorteilhaft entfallen.

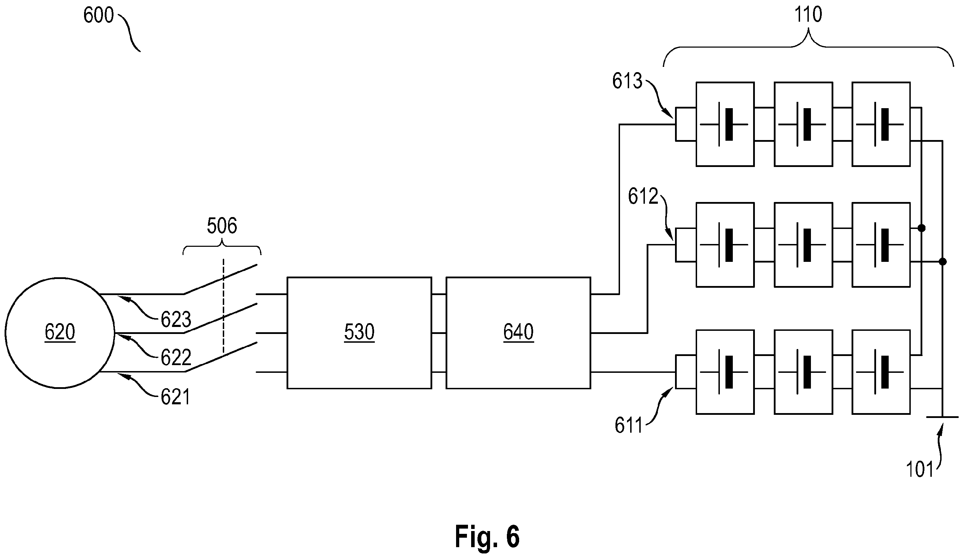

In Figur 6 wird ein Schaltschema 600 zu einem dreiphasigen Ladevorgang in einer noch anderen Ausführungsform des erfindungsgemäßen Verfahrens gezeigt. Hierbei ist eine von der Ladequelle 620 bereitgestellte Ladespannungshöhe kleiner als ein Zweifaches der Phasenspannungshöhe 102 der Wechselstrom batterie 110 aus Fig. 1, aber größer oder gleich der Phasenspannungshöhe 102 der Wechselstrombatterie 110 der Fig. 1. Über einen im Vergleich zu Fig. 5 zusätzlich angeordneten Gleichrichter 640 sind die jeweiligen Phasenausgänge 611, 612, 613 der Wechselstrombatterie 110 mit den entsprechenden Phasenausgängen 621, 622, 623 der Ladequelle 620 verbunden. Da der Gleichrichter 640 die Ladespannung der Ladequelle 620 auf positive Werte beschränkt und damit deren Ladespannungshöhe gegenüber dem Referenzpotential 101 halbiert, wird erreicht, dass eine an den jeweiligen Phasenausgängen 611, 612, 613 der Wechselstrombatterie 110 anliegende Ladespannung kleiner als eine Phasenspannung 102 der Wechselstrombatterie 110 aus Fig. 1 ist, wodurch vorteilhaft der Ladestrom durch die Wechselstrombatterie gesteuert werden kann.

## Patentansprüche

1. Verfahren zu einem Wechselstrom laden einer Wechselstrom batterie (110, 310), bei dem die Wechselstrom batterie (110, 310) einen Zentralkontroller und drei Stränge (111, 112, 113, 311, 312, 313) mit jeweilig mindestens zwei Batteriemodulen umfasst, wobei ein jeweiliges Batteriemodul der jeweilig mindestens zwei Batteriemodule mindestens einen Energiespeicher und mindestens zwei Leistungshalbleiterschalter, welche das jeweilige Batteriemodul seriell oder parallel oder unter Umgehung zu einem anderen Batteriemodul verschalten, aufweist, wobei durch die drei Stränge (111, 112, 113, 311, 312, 313) jeweilig eine Phase mit einer Phasenspannungshöhe (102) bereitgestellt wird, wobei die Wechselstrom batterie (110, 310) über eine Ladeschaltung von einer Ladequelle (220, 320, 420, 520, 620) aufgeladen wird, wobei durch die Ladequelle (220, 320, 420, 520, 620) ein mindestens einphasiger Wechselstrom mit einer Ladespannungshöhe (221, 321, 421) bereitgestellt wird, wobei die Ladeschaltung mindestens einen Schalter (206, 506) und ein Filter (230, 530) aufweist, wobei durch den Zentralkontroller während des Aufladens ein jeweiliger Ladezustand der Energiespeicher überwacht wird, wobei gemäß einer fortgeführten Auswertung der jeweiligen Ladezustände der Energiespeicher und durch eine dynamische Ansteuerung der Leistungshalbleiterschalter ein Momentanwert der Phasenspannungshöhe (102) an einen zeitlichen Verlauf eines Momentanwertes der Ladespannungshöhe (221, 321, 421) angepasst wird, und wobei die Wechselstrom batterie (110, 310) durch eine Verschaltung der Stränge (111, 112, 113, 311, 312, 313) untereinander und gegenüber einem Referenzpotential (101) gemäß eines Vergleichs zwischen Phasenspannungshöhe (102) und Ladespannungshöhe (221, 321, 421) dergestalt konfiguriert wird, dass eine Ausgangsspannungshöhe der Wechselstrombatterie (110, 310) größer als oder gleich der Ladespannungshöhe (221, 321, 421) ist.

2. Verfahren nach Anspruch 1, bei dem durch die Ladequelle (220, 320, 420) ein einphasiger Wechselstrom des mindestens einphasigen Wechselstroms bereitgestellt wird und bei dem
• im Fall, dass die Ladespannungshöhe (221) kleiner als die Phasenspannungshöhe (102) ist, ein jeweiliger Phasenausgang der drei Stränge (111, 112, 113) zu einem einzelnen Phasenausgang umkonfiguriert wird und die Wechselstrombatterie (110) direkt über das Filter (230) aus der Ladequelle (220) geladen wird,
• im Fall, dass die Ladespannungshöhe (321) kleiner als eine Spannungshöhe (105) zwischen zwei Phasen der Wechselstrom batterie (110), aber größer als oder gleich der Phasenspannungshöhe (102) ist, ein Eingang eines ersten Stranges (311) der drei Stränge (311, 312, 331) mit dem Referenzpotential (101) verbunden wird und an einem Phasenausgang des ersten Stranges (311) der drei Stränge (311, 312, 313) parallel mit einem jeweiligen Eingang der zwei anderen Stränge (312, 313) verbunden wird, sowie der jeweilige Phasenausgang (303) der zwei anderen Stränge (312, 313) der drei Stränge (311, 312, 313) zu einem einzelnen Phasenausgang der Wechselstrom batterie (310) umkonfiguriert wird und die Wechselstrom batterie (310) direkt über das Filter (230) aus der Ladequelle (320) geladen wird, oder
• im Fall, dass die Ladespannungshöhe (421) kleiner als das Zweifache der Spannungshöhe (105) zwischen zwei Phasen der Wechselstrom batterie (110), aber größer als oder gleich der Spannungshöhe (105) zwischen zwei Phasen der Wechselstrom batterie (110) ist, der Eingang des ersten Stranges (311) der drei Stränge (311, 312, 313) mit dem Referenzpotential (101) verbunden wird und der Phasenausgang des ersten Stranges (311) der drei Stränge (311, 312, 313) parallel mit dem jeweiligen Eingang der zwei anderen Stränge (312, 313) der drei Stränge (311, 312, 313) verbunden wird, sowie der jeweilige Phasenausgang (303) der zwei anderen Stränge (312, 313) der drei Stränge (311, 312, 313) zu dem einzelnen Phasenausgang der Wechselstrombatterie umkonfiguriert wird, zwischen dem einzelnen Phasenausgang und dem Filter (230) zusätzlich ein einphasiger Gleichrichter (440) angeordnet wird und die Wechselstrom batterie (310) über den einphasigen Gleichrichter (440) und das Filter (230) aus der Ladequelle (420) geladen wird.

3. Verfahren nach Anspruch 1, bei dem durch die Ladequelle (520, 620) ein dreiphasiger Wechselstrom des mindestens einphasigen Wechselstroms bereitgestellt wird und bei dem
• im Fall, dass die Ladespannungshöhe kleiner als die Phasenspannungshöhe (102) der Wechselstrombatterie (110) ist, ein jeweiliger Phasenausgang (511, 512, 513) der drei Stränge (111, 112, 113) zu einem jeweiligen Phasenausgang (521, 522, 523) der Ladequelle (520) verbunden wird und die Wechselstrom batterie (110) direkt über das Filter (530) aus der Ladequelle (520) geladen wird, oder
• im Fall, dass die Ladespannungshöhe kleiner als das Zweifache der Phasenspannungshöhe (102) der Wechselstrom batterie (110), aber größer oder gleich der Phasenspannungshöhe (102) der Wechselstrom batterie (110) ist, zwischen den jeweiligen Phasenausgängen (611, 612, 613) und dem Filter (530) zusätzlich ein dreiphasiger Gleichrichter (640) angeordnet wird und die Wechselstrom batterie (110) über den dreiphasigen Gleichrichter (640) und das Filter (530) aus der Ladequelle (620) geladen wird.

4. Verfahren nach einem der voranstehenden Ansprüche, bei dem der Zentralkontroller eine Hardware-programmierbare Prozessoreinheit aufweist, auf welcher ein Steuerprogramm zum Ansteuern der Wechselstrombatterie bei Betriebsbeginn konfiguriert wird.

5. Verfahren nach einem der voranstehenden Ansprüche, bei dem die Ladeschaltung durch einen Ladekontroller gesteuert wird, wobei der Ladekontroller eine Hardware-programmierbare Prozessoreinheit aufweist, auf welcher ein Steuerprogramm zum Ansteuern der Ladeschaltung bei Betriebsbeginn konfiguriert wird.

6. System zu einem Wechselstromladen einer Wechselstrom batterie (110, 310), bei dem die Wechselstrombatterie (110, 310) einen Zentralkontroller und drei Stränge (111, 112, 113, 311, 312, 313) mit jeweilig mindestens zwei Batteriemodulen umfasst, wobei ein jeweiliges Batteriemodul der jeweilig mindestens zwei Batteriemodule mindestens einen Energiespeicher und mindestens zwei Leistungshalbleiterschalter, welche das jeweilige Batteriemodul seriell oder parallel oder unter Umgehung zu einem anderen Batteriemodul verschalten, aufweist, wobei die drei Stränge (111, 112, 113, 311, 312, 313) dazu ausgelegt sind, jeweilig eine Phase mit einer jeweiligen Phasenspannungshöhe (102) bereitzustellen, wobei eine Ladeschaltung dazu ausgelegt ist, die Wechselstrombatterie (110, 310) von einer Ladequelle (220, 320, 420, 520, 620) aufzuladen und einen mindestens einphasigen Wechselstrom mit einer Ladespannungshöhe (221, 321, 421) bereitzustellen, wobei die Ladeschaltung mindestens einen Schalter (206, 506) und ein Filter (230, 530) aufweist, wobei der Zentralkontroller dazu ausgelegt ist, während des Aufladens einen jeweiligen Ladezustand der Energiespeicher zu überwachen und gemäß einer fortgeführten Auswertung der jeweiligen Ladezustände der Energiespeicher und durch eine dynamische Ansteuerung der Leistungshalbleiterschalter einen Momentanwert der Phasenspannungshöhe (102) an einen zeitlichen Verlauf eines Momentanwertes der Ladespannungshöhe (221, 321, 421) anzupassen, und wobei der Zentralkontroller zusätzlich dazu ausgelegt ist, die Wechselstrom batterie (110, 310) durch eine Verschaltung der Stränge (111, 112, 113, 311, 312, 313) untereinander und gegenüber einem Referenzpotential (101) gemäß eines Vergleichs zwischen Phasenspannungshöhe (102) und Ladespannungshöhe (221, 321, 421) dergestalt zu konfigurieren, dass eine Ausgangsspannungsspannungshöhe der Wechselstrom batterie (110, 310) größer oder gleich der Ladespannungshöhe (221, 321, 421) ist.

7. System nach Anspruch 6, bei dem durch die Ladequelle (220, 320, 420) einen einphasigen Wechselstrom des mindestens einphasigen Wechselstroms bereitgestellt ist und bei dem das System dazu ausgelegt ist,
• im Fall, dass die Ladespannungshöhe (221) kleiner als die Phasenspannungshöhe (102) ist, einen jeweiligen Phasenausgang der drei Stränge (111, 112, 113) zu einem einzelnen Phasenausgang der Wechselstrom batterie (110) umzukonfigurieren und die Wechselstrom batterie (110) direkt über das Filter (230) aus der Ladequelle (220) zu laden,
• im Fall, dass die Ladespannungshöhe (321) kleiner als eine Spannungshöhe (105) zwischen zwei Phasen der Wechselstrom batterie (110), aber größer als oder gleich der Phasenspannungshöhe (102) ist, ein Eingang eines ersten Stranges (311) der drei Stränge (311, 312, 313) mit dem Referenzpotential (101) zu verbinden und einen Phasenausgang des ersten Stranges (311) der drei Stränge (311, 312, 313) parallel mit dem jeweiligen Eingang der zwei anderen Stränge (312, 313) der drei Stränge (311, 312, 313) zu verbinden, sowie den jeweiligen Phasenausgang (303) der zwei anderen Stränge (312, 313) der drei Stränge (311, 312, 313) zu dem einzelnen Phasenausgang der Wechselstrombatterie (310) umzukonfigurieren und die Wechselstrombatterie (310) direkt über das Filter (230) aus der Ladequelle (320) zu laden, und
• im Fall, dass die Ladespannungshöhe (421) kleiner als das Zweifache der Spannungshöhe (105) zwischen zwei Phasen der Wechselstrom batterie (110), aber größer als oder gleich der Spannungshöhe (105) zwischen zwei Phasen der Wechselstrom batterie (110) ist, den Eingang des ersten Stranges (311) der drei Stränge (311, 312, 313) mit dem Referenzpotential (101) zu verbinden und den Phasenausgang des ersten Stranges (311) der drei Stränge (311, 312, 313) parallel mit dem jeweiligen Eingang der zwei anderen Stränge (312, 313) der drei Stränge (311, 312, 313) zu verbinden, sowie den jeweiligen Phasenausgang (303) der zwei anderen Stränge (312, 313) der drei Stränge (311, 312, 313) zu dem einzelnen Phasenausgang der Wechselstrombatterie (310) umzukonfigurieren, zwischen dem einzelnen Phasenausgang und dem Filter zusätzlich einen einphasigen Gleichrichter (440) anzuordnen und die Wechselstrombatterie (310) über den einphasigen Gleichrichter (440) und das Filter (230) aus der Ladequelle (420) zu laden.

8. System nach Anspruch 6, bei dem durch die Ladequelle (520, 620) ein dreiphasiger Wechselstrom des mindestens einphasigen Wechselstroms bereitgestellt ist und bei dem das System dazu ausgelegt ist,
• im Fall, dass die Ladespannungshöhe kleiner als die Phasenspannungshöhe (102) der Wechselstrom batterie (110) ist, einen jeweiligen Phasenausgang (511, 512, 513) der drei Stränge (111, 112, 113) zu einem jeweiligen Phasenausgang (521, 522, 523) der Ladequelle (520) zu verbinden und die Wechselstrom batterie (110) direkt über das Filter (530) aus der Ladequelle (520) zu laden,
• im Fall, dass die Ladespannungshöhe kleiner als das Zweifache der Phasenspannungshöhe (102) der Wechselstrombatterie (110), aber größer oder gleich der Phasenspannungshöhe (102) der Wechselstrom batterie (110) ist, zwischen den jeweiligen Phasenausgängen (611, 612, 113) und dem Filter (530) zusätzlich einen dreiphasigen Gleichrichter (640) anzuordnen und die Wechselstrom batterie (110) über den dreiphasigen Gleichrichter (640) und das Filter (530) aus der Ladequelle (620) zu laden.

9. System nach einem der Ansprüche 6 bis 8, bei dem der Zentralkontroller eine Hardware-programmierbare Prozessoreinheit umfasst, auf welcher ein Steuerprogramm zum Ansteuern der Wechselstrombatterie bei Betriebsbeginn konfiguriert ist.

10. System nach einem der Ansprüche 6 bis 9, bei dem die Ladeschaltung durch einen Ladekontroller gesteuert ist, wobei der Ladekontroller eine Hardware-programmierbare Prozessoreinheit umfasst, auf welcher ein Steuerprogramm zum Ansteuern der Ladeschaltung bei Betriebsbeginn konfiguriert ist.
